# EUROPÄISCHE PATENTSCHRIFT

(11) **EP 0 934 906 B1**
(45) Veröffentlichungstag und Bekanntmachung des Hinweises auf die Patenterteilung: **11.09.2002**
(21) Anmeldenummer: 98101956.5
(22) Anmeldetag: 05.02.1998
(51) Int. Cl.: C02F 11/14

(54) **Verfahren zum Verändern der Konsistenz eines Schlamms**
Process for modifying sludge consistency
Procédé de modification de la consistance d'une boue

(43) Veröffentlichungstag der Anmeldung: 11.08.1999
(73) Patentinhaber: Schorch, Klaus Werner, 99089 Erfurt (DE); Gauglitz, Eckard, Dr., 37136 Ebergötzen/Holzerode (DE)
(72) Erfinder: Schorch, Klaus Werner, 99089 Erfurt (DE); Gauglitz, Eckard, Dr., 37136 Ebergötzen/Holzerode (DE)
(74) Vertreter: Patentanwälte Rehberg + Hüppe

(56) Entgegenhaltungen:
- EP-A- 0 022 318
- US-A- 4 514 307
- US-A- 4 615 809
- US-A- 5 584 792
- US-A- 5 669 969

## Beschreibung

Die Erfindung betrifft ein Verfahren zur Verbesserung der Transportfähigkeit, Verarbeitbarkeit und Einbaufähigkeit eines Schlamms durch Veränderung seiner Konsistenz, indem dem Schlamm ein Additiv hinzugefügt und dieses in dem Schlamm verteilt wird, wodurch die die Verarbeitbarkeit beschreibende Proctorkurve des Gemisches aus Schlamm und Additiv im Vergleich zu der Proctorkurve des Schlamms in Richtung höherer Wassergehalte verschoben wird. Unter dem Begriff Schlamm werden natürliche Böden, z. B. Tone, überfeuchte Massen des Deponie-, Erd- und Grundbaus sowie des Tief- und Straßenbaus, aber auch Industrieschlämme, beispielsweise Dickschlämme der keramischen oder chemischen Industrie, der Zementindustrie, der Kraftwerkstechnik und der Aufbereitungstechnik von Abfallverwertungsanlagen verstanden. Auch kommunale Klärschlämme fallen unter diesen Begriff. Bei solchen Schlämmen kommt es auf deren Konsistenz an, die das Verhalten des jeweiligen Schlammes in plastischem Zustand beschreibt. Die Konsistenz und die damit verbundenen Eigenschaften sollen bewußt verändert werden.

Ein Verfahren der eingangs beschriebenen Art ist aus der Broschüre "Bodenverbesserung, Bodenverfestigung mit Kalk" des Bundesverbandes der Deutschen Kalkindustrie e.V., Auflage 1981, bekannt. Dabei wird dem Boden als Additiv Kalk hinzugefügt. Dieser Kalk wird auf die zu verbessernde Bodenschicht aufgestreut und in dem Boden durch Einarbeiten verteilt. Dabei wird die die Bearbeitbarkeit beschreibende Proctorkurve des Gemisches aus Boden und Kalk im Vergleich zu der Proctorkurve des Bodens allein in Richtung höherer Wassergehalte verschoben. Bei der Verwendung von Kalk als Additiv ergeben sich einerseits sehr schnell ablaufende Vorgänge, nämlich der Entzug von Wasser aus dem Boden infolge chemischer Reaktionen. Teilweise tritt auch ein physikalisches Verdampfen ein. Bei der Verwendung von Kalk ergeben sich andererseits aber auch Langzeitreaktionen, d. h. relativ langsam ablaufende Vorgänge, wobei sich dabei auch die Festigkeitswerte verändern, indem die Druckfestigkeit, die Scherfestigkeit und die Zugfestigkeit ansteigen. Diese Langzeitreaktionen sind zuweilen unerwünscht, weil sich dadurch die Eigenschaften im Langzeitverhalten ändern.

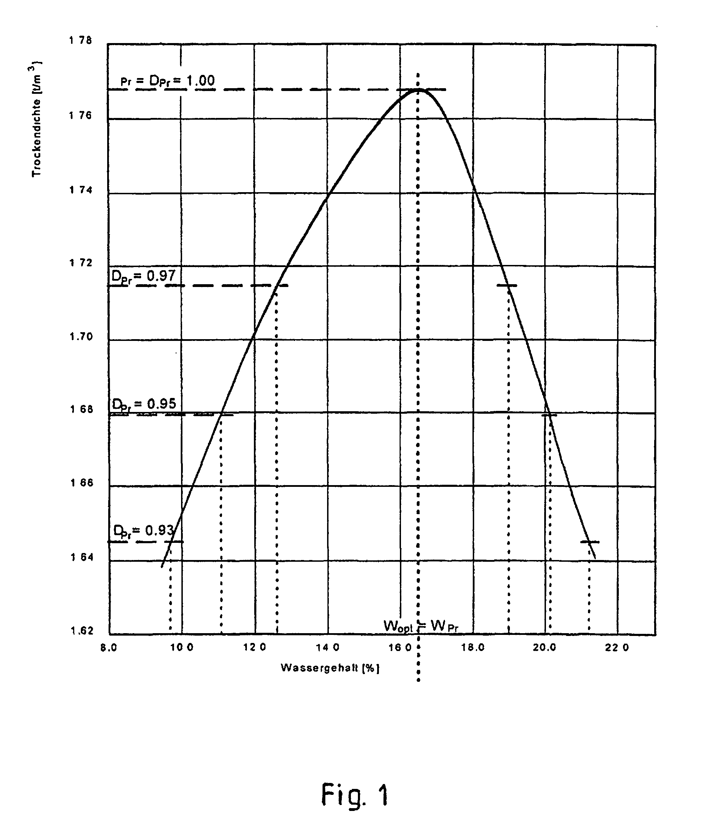

Mit der gemäß DIN 18127 festgelegten Proctordichte wird ein Diagramm der Trockendichte über dem Wassergehalt bereitgestellt, bei dem grundsätzlich eine Parabel erscheint, die bei einem bestimmten Wassergehalt ihr Maximum hat. Dieses Maximum trennt gleichzeitig die trockene von der nassen Seite, wobei auf diesen Seiten unterschiedliche Eigenschaften vorliegen. Fig. 1 zeigt eine solche Proctorkurve nach DIN 18127 sowie die korrelierten Zustandsgrößen im mineralischen Dichtungsbau für Deponien. In dem Diagramm ist die Trockendichte über dem Wassergehalt aufgetragen. Es ergibt sich typischerweise eine nach unten geöffnete Parabel, die in ihrem Maximalwert eine maximale Trockendichte und einen zugeordneten Wassergehalt widerspiegelt. Eine vertikale Linie durch dieses Maximum läßt links von der Linie die sogenannte trockene Seite und rechts von der Linie die sogenannte nasse Seite entstehen. Der für eine Verdichtung dieses Einbaumaterials erforderliche Energieaufwand ist abhängig von dem jeweiligen Wassergehalt. Auf der trockenen Seite ergibt sich ein relativ hoher Energieaufwand, eine relativ hohe Steifigkeit und Konsistenz des betreffenden eingebauten Materials, beispielsweise Boden, sowie eine hohe Scherfestigkeit. Der Boden läßt sich mit Maschinen gut befahren. Er weist einen hohen Luftporengehalt, jedoch leider einen vergleichsweise höheren Durchlässigkeitsbeiwert auf. Auf der nassen Seite ergibt sich jedoch vergleichsweise günstiger ein relativ niedriger Energieaufwand zum Erreichen des angestrebten Verdichtungsziels. Auch die Konsistenz, Steifigkeit und Scherfestigkeit des Bodens sind relativ niedrig. Gut ist auch der relativ niedrige Durchlässigkeitsbeiwert, jedoch läßt sich ein derart nasser Boden mit Maschinen schlecht befahren, und auch der Luftporengehalt ist relativ niedrig.

Es sind verschiedene Proctordichten 0,93, 0,95, 0,97 und 1,0 eingezeichnet. Dementsprechend ergeben sich unterschiedlich breite Wassergehaltsbänder und auch unterschiedlich breite Einbau-Wassergehaltsbänder auf der nassen Seite, wobei typischerweise das jeweilige Einbau-Wassergehaltsband etwas schmaler als die Hälfte des jeweiligen Wassergehaltsbandes ist, weil die Parabel auf der nassen Seite vergleichsweise steiler abfällt als auf der trockenen Seite.

Der Erfindung liegt die Aufgabe zugrunde, ein Verfahren der eingangs beschriebenen Art bereitzustellen, welches geeignet ist, die Konsistenz eines Schlammes in kurzer Behandlungszeit - Verweilzeit des Schlamms und des Additivs im Mischer - zielgerichtet zu ändern und die eingestellte Konsistenz dauerhaft zu erhalten. Es geht dabei darum, insbesondere die Transportfähigkeit, Einbaufähigkeit und Verarbeitungsfähigkeit derartiger Schlämme bei hohen Wassergehalten herzustellen oder zu verbessern.

Erfindungsgemäß wird dies bei dem Verfahren der eingangs beschriebenen Art dadurch erreicht, daß dem Schlamm als Additiv eine kalkhaltige Kraftwerksfilterasche mit einem Anteil zwischen 2 und 7 Gew.%, bezogen auf die Trockenmasse des Schlamms, hinzugefügt wird, und daß das Additiv und der Schlamm in volumenkonstanten Anteilen unter Berücksichtigung der Veränderung der Schüttdichte der Kraftwerksfilterasche bei Zutritt von Wasser zwangsgemischt und damit das Additiv im Schlamm homogen verteilt wird.

Die Erfindung geht von dem Gedanken aus, als Additiv eine kalkhaltige Kraftwerksfilterasche einzusetzen, und zwar in bezogen auf die Trockenmasse des Schlammes relativ geringen gewichtsmäßigen Anteilen. Es muß sich bei dem Additiv um eine solche Kraftwerksfilterasche handeln, die kalkhaltig ist, die Branntkalk und/oder hydraulisch aktive Kalke enthält. Solche Kraftwerksfilteraschen besitzen in der Regel ein Körnungsband im µm-Bereich, wobei die mengenmäßigen Anteile der Korngrößenverteilung durchaus auf unterschiedliche Bereiche fallen können bzw. an unterschiedlichen Stellen ihr Maximum auftreten kann. Dennoch handelt es sich bei solchen Kraftwerksfilteraschen immer um solche, die beim Zusammenbringen mit Wasser ihr Volumen vergrößern und demzufolge ihre Schüttdichte verringern. Weiterhin ist bei dem Verfahren wesentlich, daß das Additiv und der Schlamm zwangsgemischt werden, also in einem Zwangsmischer eine homogene Verteilung des Additivs im Schlamm erreicht wird, damit während dieser Behandlung das Zusammentreffen von Wasser aus dem Schlamm mit dem Additiv letztlich dazu führt, daß die Proctorkurve des Gemisches im Vergleich zu der Proctorkurve des Schlammes zu höheren Wassergehalten verschoben wird. Dies bedeutet nicht, daß sich der Wassergehalt des Gemisches von dem Wassergehalt des Schlamms wesentlich unterscheidet. Unterschiedlich werden hierdurch nur die wesentlichen Eigenschaften des Gemisches gestaltet, insbesondere seine Transportfähigkeit, Verarbeitbarkeit und Einbaufähigkeit. Auch für die Festigkeitseigenschaften ist diese Behandlung wichtig.

Es ist wesentlich, die Zwangsmischung unter volumenkonstanten Bedingungen durchzuführen, d.h. es kommt darauf an, konstante Volumina zu haben bzw. zur Verfügung zu stellen, nicht dagegen konstante Gewichtsanteile. Dies bezieht sich sowohl auf die konstanten Volumina des Schlamms und der Kraftwerksfilterasche als auch auf die Volumina der Mischeinrichtungen. Bei Anwendung konstanter Gewichtsanteile dagegen können sich unterschiedliche Schüttdichten und damit ganz unterschiedliche Eigenschaften ergeben, so daß eine Reproduzierbarkeit nicht mehr gegeben ist.

Das neue Verfahren weist eine Reihe von Vorteilen auf. Es arbeitet emissionsfrei, d. h. es entsteht kein Abwasser und kein staubförmiges Abfallprodukt. Das Verfahren läßt sich vergleichsweise kostengünstig anwenden. Der Einsatz von thermischer Energie oder die Anwendung eines Druckgefälles kommen ebenfalls in Fortfall. Überraschenderweise erbringt jedoch die Anwendung des Verfahrens eine Erhöhung der Plastizität des Gemisches, indem die Fließgrenze nach höheren Wassergehalten und auch die Ausrollgrenze nach höheren Wassergehalten verschoben wird, wobei trotzdem die Plastizität ansteigt. Die Durchführung der Zwangsmischung erfordert nur eine relativ kurze Zeitdauer. Das Gemisch erhält jedoch während dieser kurzen Behandlungszeit die gewünschten Eigenschaften, die sich auch unter Langzeitbedingungen nicht mehr wesentlich verändern. Das Gemisch läßt sich ohne weiteres transportieren, handhaben und auch entsprechend der Proctorkurve verdichtet einbauen. Mit der Verwendung von Kraftwerksfilterasche als Additiv steht ein vergleichsweise preiswerter Stoff zur Verfügung, der ohnehin entsorgt werden muß. Es versteht sich, daß es natürlich unterschiedliche Kraftwerksfilteraschen gibt. Auch in dem Bereich der kalkhaltigen Kraftwerksfilteraschen unterscheidet sich die eine Asche von der anderen. Es versteht sich, daß eine einzige Kraftwerksfilterasche oder aber auch Gemische solcher Kraftwerksfilteraschen als Additiv eingesetzt werden können.

Das Verfahren eignet sich auch zur Schadstoffimmobilisierung, sowie zur Schadstoff-Fixierung durch Umhüllung und Einschluß der Schadstoffpartikel in die sehr schwach wasserdurchlässige Matrix des Gemisches aus Schlamm und Additiv. Die Verwendung von Kraftwerksfilteraschen als Additiv verschiebt den pH-Wert in basische Bereiche, also in Bereiche, in denen bestimmte Schadstoffe nicht mehr löslich sind. Damit eignet sich dieses Verfahren auch zur Entsorgung problematischer Schlämme, die beispielsweise durch Schwermetalle belastet sind.

Das Verfahren gestattet eine breite Anwendbarkeit in den verschiedensten Anwendungsgebieten, wobei je nach Anwendungsgebiet die Anteile der als Additiv zu benutzenden Kraftwerksfilteraschen in für den Anwendungsfall typischen Bereichen schwanken können. Dabei geht es darum, innerhalb des angegebenen Gesamtbereiches kleinere Teilbereiche einzuhalten und diese weder zu über- noch zu unterschreiten. Der als Additiv eingesetzte Gewichtsanteil ist ohnehin sehr niedrig, da er immer auf die Trockenmasse des Schlamms bezogen ist. Trotzdem ist es möglich, durch Variation des Anteils des Additivs die eine oder andere Eigenschaft zu betonen bzw. zu verstärken oder zu vermindern. Das Verfahren läßt sich praktisch in jeder Größenordnung anwenden, angefangen vom Labormaßstab bis zum großindustriellen Einsatz. Dabei entsteht entsprechend dem jeweiligen Anteil des Additivs immer das gleiche Ergebnis.

Zum Erhalt einer reproduzierbaren Konsistenz in dem Gemisch wird die durch Volumenzunahme der jeweils eingesetzten kalkhaltigen Kraftwerksfilterasche unter Anwesenheit von Wasser nach Zwangsmischung in volumenkonstanten Anteilen sich ergebende Schüttdichte definiert ermittelt, und dann wird die mit dem Gewichtsanteil multiplizierte ermittelte Schüttdichte als Real-Gewichtsanteil dem Schlamm zur Zwangsmischung hinzugefügt. Diese Maßnahme dient dem Ziel, gleiche Konsistenz des Gemisches zu erreichen, obwohl unter Umständen unterschiedliche Kraftwerksfilteraschen eingesetzt werden müssen. Das Ergebnis ist jedoch von dem Anteil der jeweiligen Kraftwerksfilterasche extrem abhängig. Es ist deshalb erforderlich, für jede neu eingesetzte Kraftwerksfilterasche zunächst die Schüttdichte definiert zu ermitteln. Dies geschieht zweckmäßig nach dem Verfahren nach Böhme. Bei dieser Ermittlung werden reproduzierbar festgelegte Verhältnisse eingesetzt. Die Kraftwerksfilterasche wird einer Trockenlöschung unterworfen. Dabei wird die Kraftwerksfilterasche mit Wasser zusammengebracht, und es wird nach Beendigung dieser Trockenlöschung die Schüttdichte ermittelt. Bei solchen kalkhaltigen Kraftwerksfilteraschen ergibt sich unter Anwesenheit von Wasser eine vergleichsweise verringerte Schüttdichte gegenüber der Schüttdichte der Kraftwerksfilterasche in trockenem Zustand. Durch das Zusammenbringen der Kraftwerksfilterasche mit Wasser während der Trockenlöschung tritt auch eine Änderung der mengenmäßigen Bestandteile in den einzelnen Korngrößenbereichen auf, die letztlich die Ursache für die verringerte Schüttdichte darstellt. Diese Eigenschaft der Kraftwerksfilteraschen wird bei dem erfindungsgemäßen Verfahren zur Veränderung der Konsistenz des Gemisches ausgenutzt. Um gleiche Ergebnisse zu erzielen, ist es somit erforderlich, bei Verwendung unterschiedlicher Kraftwerksfilteraschen unterschiedliche Real-Gewichtsanteile an dieser Asche dem Schlamm zur Zwangsmischung hinzuzufügen.

Das Verfahren läßt sich in vielen Bereich der Technik anwenden. Im Deponiebau, in dem es auf den Einbau eines Gemisches ankommt, welches auch unter Langzeitbedingungen seine Plastizität behält und sehr schwach wasserdurchlässig bleibt, wird dem als Schlamm eingesetzten bindigen Boden als Additiv eine kalkhaltige Kraftwerksfilterasche mit einem Anteil zwischen 4 und 5 Gew.%, bezogen auf die Trockenmasse des bindigen Bodens, hinzugefügt. In der Zementindustrie, also bei der Herstellung von Zement, wird ein Anteil Ton eingesetzt. Dabei kommt es darauf an, den häufig übernäßten Ton transportfähig zu gestalten, ohne daß bei der Zementherstellung schädliche Stoffe eingetragen werden. Insbesondere geht es dabei um die Vermeidung von Alkalien und Sulfaten. Somit wird dem als Schlamm eingesetzten Tonanteil als Additiv eine kalkhaltige Kraftwerksfilterasche mit einem Anteil zwischen 5 und 6 Gew.%, bezogen auf die Trockenmasse des Tonanteils, hinzugefügt. Zur Bodenstabilisierung im Straßen- und Wegebau wird dem als Schlamm eingesetzten Boden als Additiv eine kalkhaltige Kraftwerksfilterasche mit einem Anteil zwischen 4 und 6 Gew.%, bezogen auf die Trockenmasse des Bodens, hinzugefügt. Das Verfahren läßt sich auch zur Behandlung von Klärschlamm anwenden und einsetzen. Zur Stabilisierung von Klärschlamm wird dem als Schlamm eingesetzten Klärschlamm als Additiv eine kalkhaltige Kraftwerksfilterasche mit einem Anteil zwischen 5 und 7 Gew.%, bezogen auf die Trockenmasse des Klärschlamms, hinzugefügt. Als weiteres Beispiel sei die Stabilisierung von Schlamm aus Rauchgasentschwefelungsanlagen genannt. Dabei wird dem eingesetzten Schlamm als Additiv eine kalkhaltige Kraftwerksfilterasche mit einem Anteil zwischen 5 und 7 Gew.%, bezogen auf die Trockenmasse des Schlamms, hinzugefügt.

Das erfindungsgemäße Verfahren erlaubt die gezielte Einstellung und Verbesserung einzelner oder mehrerer Eigenschaften des Gemisches im Vergleich zum (unbehandelten) eingesetzten Schlamm. Um eine möglichst schnelle Annäherung an die gewünschten Eigenschaften zu erzielen, wird eine erste Proctorkurve des Schlamms und eine zweite Proctorkurve des Gemisches aus Schlamm und Additiv in einem gewählten Gewichtsanteil ermittelt, und dann anhand der Differenz der Proctordichten der beiden Proctorkurven und der zugeordneten Wassergehalte der Gewichtsanteil des Additivs quantitativ auf die gewünschte Konsistenz eingestellt. Diese Möglichkeit ist gegeben, weil ein direkter funktionaler Zusammenhang zwischen der Differenz der Proctordichten des Schlamms und der Proctordichte des Gemisches bei der Verschiebung in Richtung höherer Wassergehalte mit dieser Verschiebung verbunden ist. Anhand der Differenz der Dichten zweier Proctorkurven kann auf die Verschiebung der Wassergehalte im benachbarten Bereich geschlossen werden.

Die Zwangsmischung erfolgt für eine Dauer zwischen 2 und 4 Minuten. Es ist erstaunlich, daß in einem Hochleistungszwangsmischer innerhalb dieser kurzen Zeit eine homogene Verteilung des Additivs in dem Schlamm erreicht werden kann, wobei auch die gewünschte Veränderung der Konsistenz in dieser Zeit eintritt.

Das Verfahren wird nachfolgend noch einmal im Detail verdeutlicht und beschrieben:

Die mischtechnische Aufbereitung von nassen und demzufolge niedrig-konsistenzen, breiigen bis zähplastischen oder fließfähigen Massen, also Schlämmen, mit Hilfe von Kraftwerksfilteraschen als undefinierte mineralische Stäube steht zunächst vor dem Problem der vergleichbaren Dosierung. Es muß ein Maßstab gefunden werden, der zu reproduzierbaren Ergebnissen führt. Auch die als Additiv eingesetzten Kraftwerksfilteraschen können hinsichtlich ihres Körnungsaufbaus und in ihrer stofflichen Beschaffenheit sehr voneinander abweichen, so daß die Durchführung des Verfahrens ausschließlich unter Einhaltung prozentualer Gewichtsanteile keine Aussage über die Reproduzierbarkeit und die zu erwartenden Eigenschaften macht. Als Additive finden Kraftwerksfilteraschen in Form mineralischer, staubförmiger Korngemische mit überwiegend hydroxidischer und latent bis schwach hydratativer Reaktivität Verwendung. Dies zielt darauf ab, die Änderung der Konsistenz in kurzer Zeit, aber dann über lange Zeit gleichbleibend zu bewirken. Für den Zwangsmischvorgang der Kraftwerksfilteraschen mit den Schlämmen ist das ursprüngliche Körnungsband der Kraftwerksfilterasche als Bemessungsgröße bedeutungslos. In Tabelle 1 ist das Körnungsband und die Schüttdichte einer Kraftwerksfilterasche in trockenem, d. h. ungelöschtem zustand und in trocken gelöschtem Zustand aufgeführt. Es ist erkennbar, daß sich durch die Anwesenheit von Wasser das Körnungsband in Richtung Feinkörnigkeit erheblich verschiebt. Umgekehrt verringert sich dabei die Schüttdichte der Kraftwerksfilterasche. So ist aus Tabelle 1 erkennbar, daß die dort untersuchte Kraftwerksfilterasche in trockenem Zustand mit 46,9 Gew.-% ihren maximalen Anteil in einer Klasse zwischen 0,125 mm bis 0,250 mm hatte, während nach der Trockenlöschung das Maximum mit 74,75 Gew.-% in der Klasse 0 bis 0,05 mm liegt. Auch der Trockenlöschprozeß wird unter volumenkonstanten Bedingungen durchgeführt. Durch die beschriebene Verschiebung des Kornklassenmaximums verringert sich die Schüttdichte von 0,92 t/m³ auf 0,75 t/m³.

Die verfahrenstechnisch reproduzierbar und vergleichbar trockengelöschten Kraftwerksfilteraschen bilden die Grundlage für eine Vergleichbarkeitsmethode, also die Möglichkeit, trotz Verwendung unterschiedlicher Kraftwerksfilteraschen zu gleichen oder ähnlichen Ergebnissen zu gelangen. Es ist auch möglich, auf dieser Basis reproduzierbare, übereinstimmende Ergebnisse zu erhalten. Dies mag an einem nachfolgenden Beispiel erläutert werden:

Im Deponiebau werden insbesondere Tone als Schlamm zum Abdichten von Basis und Oberfläche der Deponie eingesetzt. Es wird zunächst die Schüttdichte der Kraftwerksfilterasche in trockenem, d. h. ungelöschtem Zustand, ermittelt, die als Additiv verwendet werden soll. Diese Schüttdichte ergibt sich gemäß Tabelle 1 für die betreffende Kraftwerksfilterasche zu 0,92 t/m³. Anschließend wird die für den jeweiligen Anwendungsfall verfügbare Kraftwerksfilterasche mit Hilfe eines Zwangsmischers trockengelöscht. Es wird ein Zwangsmischer eingesetzt, der ein Volumen von 80 l besitzt. Dieser Zwangsmischer wird mit 28 l Kraftwerksfilterasche befüllt. Sodann werden 12 Gew.-% bzw. Vol.-% Wasser, also 3.360 g Wasser hinzugegeben, was einem günstigen Erfahrungswert für eine praktische Trockenlöschung dieser Kraftwerksfilteraschen entspricht. Sodann wird der Zwangsmischer mit konstanten Geschwindigkeiten seines Gefäßes und seines Rührwerks für 40 Minuten in Tätigkeit gesetzt, und es entsteht die trockengelöschte Kraftwerksfilterasche. Von dieser Kraftwerksfilterasche wird jetzt die Schüttdichte nach Böhme ermittelt. Diese ergibt sich zu 0,75 t/m³. Für den beschriebenen Anwendungs- und Einsatzfall möge ein Anteil von 4 Gew.-% Kraftwerksfilterasche als sinnvoll geplant sein. Da jedoch reale Kraftwerksfilteraschen keine konstanten Eigenschaften besitzen, ist es erforderlich, eine Umrechnung der Gewichtsanteile in Real-Gewichtsanteile unter volumenkonstanten Bedingungen durchzuführen. Dies bedeutet, daß die als sinnvoll geplanten 4 Gew.-% mit der ermittelten Schüttdichte der trockengelöschten Filterasche, also mit 0,75, zu multiplizieren sind. Es ergeben sich somit etwa 3 Real-Gewichtsanteile (vgl. in Tabelle 2: 3,05 %). Dies bedeutet, daß zur Erreichung der angestrebten Wirkung und unter Berücksichtigung der Eigenschaften der realen Kraftwerksfilterasche 3 Real-Gew.-% anstelle der geplanten 4 Gew.-% der folgenden Zwangsmischung zugrundezulegen sind. Gemäß dem Mischungsansatz des Verfahrens müssen also z. B. 4.000 kg trockener Ton mit 120 kg der Kraftwerksfilterasche, nämlich 3 Real-Gewichtsanteilen, zwangsgemischt werden. Der real vorhandene Ton möge einen Wasseranteil von 25 Gew.-% haben. Dies bedeutet, daß ein Gemisch von 4.000 kg trockenem Ton, 1.000 kg Wasser und 120 kg Filterasche zwangsgemischt werden, so daß ein Gemisch von 5.120 kg entsteht. Es wird nun eine erste Proctorkurve des Schlamms aufgestellt. Diese läßt erkennen, daß der Schlamm mit seinem natürlichen Wassergehalt von 25 Gew.-% für den Einbau ungeeignet ist. Es wird dann eine zweite Proctorkurve des obigen Gemisches erstellt, die zu erkennen gibt, ob dieses Gemisch bereits für den Einbau geeignet ist. Im Eignungsfall kann die Zwangsmischung dann unter jeweiliger Verwendung von 3 Real-Gewichtsanteilen dieser Kraftwerksfilterasche erfolgen und der Einbau vorgenommen werden. Wenn sich jedoch anhand der Proctorkurve des Gemisches ergibt, daß auch dieses Gemisch für den Einbau noch ungeeignet ist, dann muß der Real-Gewichtsanteil der Filterasche nochmals verändert werden. Gemäß einer Erkenntnis der vorliegenden Erfindung besteht eine Korrelation zwischen den Differenzen der Proctordichten und den damit zugeordneten Wassergehalten, also eine Korrelation zwischen den Proctorkurven, die infolge Beimischung von Kraftwerksfilterasche in Richtung auf die nasse Seite verschoben werden. Die Proctordichten verhalten sich zueinander wie die zugehörigen optimalen Wassergehalte, also die Wassergehalte im Optimum der jeweiligen Proctorkurve. Die Real-Gewichtsanteile verhalten sich auch in diesem Verhältnis, so daß über dieses Verhältnis ein Real-Gewichtsanteil an Kraftwerksfilterasche ermittelt bzw. angegeben werden kann, bei dessen Anwendung auf den real vorgegebenen Ton eine Verschiebung der Proctorkurve in Richtung höherer Wassergehalte derart erfolgt, daß aus dieser Verschiebung auf die Einbaubarkeit geschlossen werden kann. Der mit diesem korrigierten Real-Gewichtsanteil zwangsgemischte reale Ton verhält sich dann so wie ein sehr viel trockener, nicht mit der Kraftwerksfilterasche zwangsgemischter Ton.

Tabelle 2 zeigt den Zusammenhang zwischen Gewichtsanteilen und Real-Gewichtsanteilen für vier unterschiedliche Kraftwerksfilteraschen in Abhängigkeit von der jeweiligen Schüttdichte. Die Asche Nr. 1 mit ihrer Schüttdichte nach Trockenlöschung von 0,75 t/m³ ist die Kraftwerksfilterasche, die der Tabelle 1 zugrundeliegt. Die Kraftwerksfilteraschen 1, 2 und 3 besitzen eine Schüttdichte nach Trockenlöschung, die kleiner als 1,0 t/m³ ist. Die Kraftwerksfilterasche Nr. 4 weist dagegen eine höhere Trockendichte nach Trockenlöschung als 1,0 t/m³ auf. In den nachfolgenden Spalten sind für geschätzte Gewichtsanteile von 3, 4 und 5 Gew.-% die sich ergebenden zugehörigen Real-Gewichtsanteile nach Trockenlöschung unter volumenkonstanten Bedingungen angegeben. Bei den Kraftwerksfilteraschen 1, 2 und 3 sind die Real-Gewichtsanteile im Vergleich zu den Gewichtsanteilen kleiner. Bei der Asche Nr. 4 ist dies umgekehrt. Man erkennt hieraus, daß die Aschen Nr. 1, Nr. 2 und Nr. 3 für den angegebenen Zweck besonders geeignet sind, d. h. in sehr kleinen Anteilen volumenkonstant beigemischt werden müssen, während bei Anwendung der Kraftwerksfilterasche 4 vergleichsweise höhere Anteile eingesetzt werden müssen, um zu reproduzierbaren Bedingungen zu gelangen. Um nicht unnötig hohe Anteile dem Schlamm hinzuzufügen und in diesen homogen einarbeiten zu müssen, sollte die Filterasche Nr. 4 nur dann benutzt werden, wenn gleichzeitig der Gesichtspunkt der Entsorgung berücksichtigt wird. Am günstigsten kann das Verfahren mit der Kraftwerksfilterasche Nr. 2 durchgeführt werden. Hier sind nur 2,84 Real-Gewichtsanteile hinzuzufügen. Die homogene Einarbeitung dieses sehr kleinen Anteils läßt sich mit vergleichsweise minimalem Kostenaufwand durchführen und erbringt trotzdem das gewünschte Arbeitsergebnis.

In den angegebenen Grenzen von 2 bis 7 Gew.-% kalkhaltiger Kraftwerksfilterasche, bezogen auf die Trockenmasse des Schlamms, läßt sich das Verfahren im laufenden Betrieb, d. h. ohne Maschinenstillstand des Zwangsmischers, durchführen. Da die Zwangsmischung nur für eine Dauer von zwischen etwa 2 und 4 Minuten erfolgt, stellt sich die homogene Mischung mit der gewünschten Konsistenzänderung innerhalb dieser kurzen Zeit ein. Die Konsistenz ändert sich auch nicht unter Langzeitbedingungen. Somit entsteht z. B. für den Deponiebau ein rolliges, transportfähiges und einbaufähiges Material, welches die gewünschten und erforderlichen Eigenschaften für einen verdichtenden Einbau besitzt. Die Konsistenzänderung geht dabei in Richtung von flüssig nach breiig-steif bis zu halbfest gemäß DIN 18122.

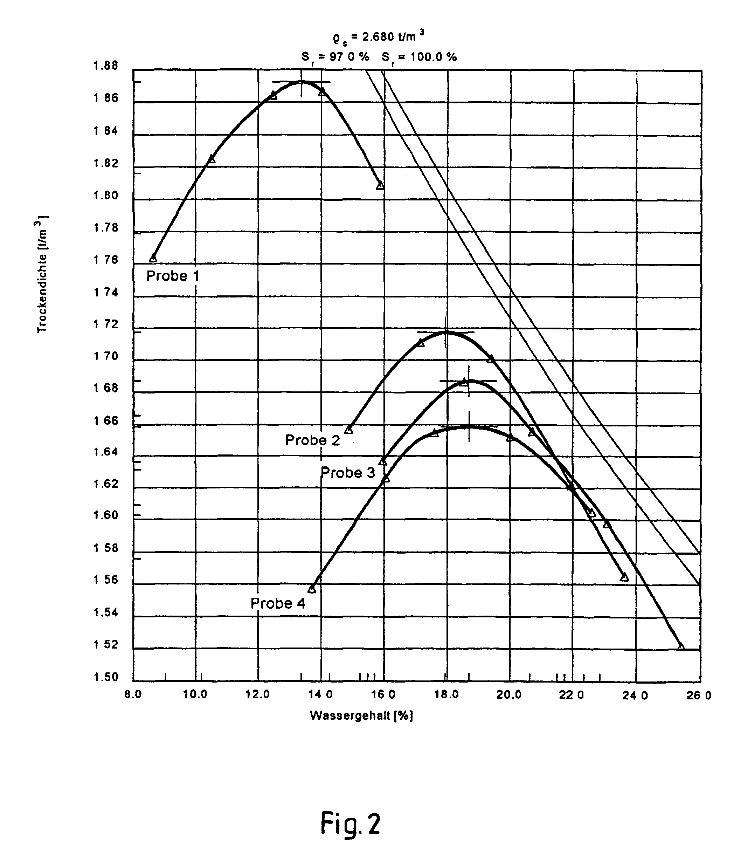

Fig. 2 läßt die Wirkung des erfindungsgemäßen Verfahrens, dargestellt durch die verschiedenen Proctorkurven, erkennen. Die Proctorkurve der Probe 1 ist die Proctorkurve des unbehandelten, also nicht mit Kraftwerksfilterasche vermischten Schlamms, hier in Form eines Lößlehms. Es ist erkennbar, daß die maximale Proctordichte bei 1,872 t/m³ liegt, und zwar bei einem Wassergehalt von 13,4 %. Die als Proben 2, 3 und 4 bezeichneten Proctorkurven sind diejenigen Proctorkurven des jeweiligen Gemisches, also des mit einer Kraftwerksfilterasche vermischten Schlamms. Die Kurve gemäß Probe 2 gilt für die Hinzufügung eines Gewichtsanteiles von 3 Gew.-% einer betreffenden Kraftwerksfilterasche. Die Kurve gemäß Probe 3 gilt für den gleichen Schlamm, jedoch behandelt mit einer Kraftwerksfilterasche in einem Gewichtsanteil von 4 Gew.-%. Bei der Probe 4 schließlich wurde der Lößlehm mit 5 Gew.-% der Kraftwerksfilterasche zwangsgemischt. Man erkennt deutlich, wie die drei Kurven gegenüber der Proctorkurve des unbehandelten Schlamms nach rechts in Richtung höherer Wassergehalte verschoben sind. Die zugehörigen Wassergehalte liegen in der Größenordnung von 18 %. Die Maxima der Proctorkurven, also 100 % der jeweiligen Proctordichten, liegen gegenüber der ursprünglichen Proctorkurve erniedrigt in einer Größenordnung der Trockendichte zwischen etwa 1,72 t/m³ und 1,66 t/m³. Es ist erkennbar, daß mit zunehmendem Anteil von Kraftwerksfilterasche die Proctorkurven des Gemisches nach rechts in Richtung höherer Wassergehalte verschoben werden, wobei gleichzeitig die Maxima der jeweiligen Proctorkurve des Gemisches vergleichsweise erniedrigt sind und die Proctorkurven selbst breiter werden, so daß sich vorteilhaft bei vergleichsweise höheren Anteilen von Kraftwerksfilterasche auch breitere Einbau-Wassergehaltsbänder ergeben, also eine größere Sicherheit beim Einbau dieser Gemische. Diese Gemische verhalten sich folglich wie ein Schlamm mit vergleichsweise niedrigerem Wassergehalt. In einer Reihe von durchgeführten Versuchen wurde gefunden, daß die definierten einfachen Proctordichten mit den Werten 100 %, 97 % und 95 % stets kleiner als die entsprechenden Proctordichten der Schlämme sind. Ferner wurde festgestellt, daß zwischen den Differenzen der Proctordichten einerseits und der Verschiebung der Wassergehalte andererseits ein funktionaler Zusammenhang besteht, so daß mit einer Erhöhung der Proctordichtedifferenz eine ebenfalls erhöhte Verschiebung in Richtung größerer Wassergehalte einhergeht. In Tabelle 3 ist der Zusammenhang zwischen der Differenz der Proctordichten und der zugehörigen Differenz der Wassergehalte angegeben, und zwar für verschiedene ausgewählte natürliche Dichtungsbaustoffe zur Herstellung von Basisdichten für Hausmülldeponien. Die unterschiedlichen Schlämme wurden in Form von Geschiebelehm, Lößlehm, Ton der Unterkreide und von fettem Ton untersucht, und zwar jeweils mit unterschiedlichen Typen von Kraftwerksfilteraschen, so wie diese verfügbar waren. Es sind die Gewichtsanteile angegeben, wobei diese jedoch infolge der volumenkonstanten Bedingungen letztlich in Form der Real-Gewichtsanteile hinzugefügt wurden. Bei unterschiedlicher Differenz der Proctordichte ergibt sich eine unterschiedliche Differenz der Wassergehalte, wie angegeben für Proctordichten von 95 %. Die Erfindung ist auf die Herbeiführung dieser Differenz der Wassergehalte gerichtet. Durch den Zwangsmischprozeß wird jedoch auch Energie in das Gemisch aus Schlamm und Kraftwerksfilterasche eingetragen, die einerseits sowie durch eine schwach exotherme Reaktion des Gemisches selbst andererseits zu einer mäßigen Temperaturerhöhung führt. Hierdurch treten Wasserverluste durch Verdunstung ein, die in Tabelle 3 als Verschiebungsanteil des Wasserverlustes angegeben wurden. Die Gesamtverschiebung des Wassergehaltes ergibt sich somit aus der Summe der Differenz der Wassergehalte und dem Verschiebungsanteil des Wasserverlustes.

Tabelle 4 zeigt die Eigenschaftsveränderungen von natürlichen Deponiebaustoffen mit und ohne Additivzugabe am Beispiel ausgewählter Bodenarten. Man erkennt zunächst anhand des Schlamms die unterschiedlichen Korngrößen und Korngrößenverteilungen. Als Additiv dient wieder kalkhaltige Kraftwerksfilterasche. Durch die Zwangsvermischung ergibt sich eine Erhöhung der Fließgrenze einerseits und auch eine Erhöhung der Ausrollgrenze andererseits. Die Erhöhung der Fließgrenze ist jedoch immer größer als die Erhöhung der Ausrollgrenze, so daß sich eine positive Wirkung für die Erhöhung der Plastizitätszahl ergibt.

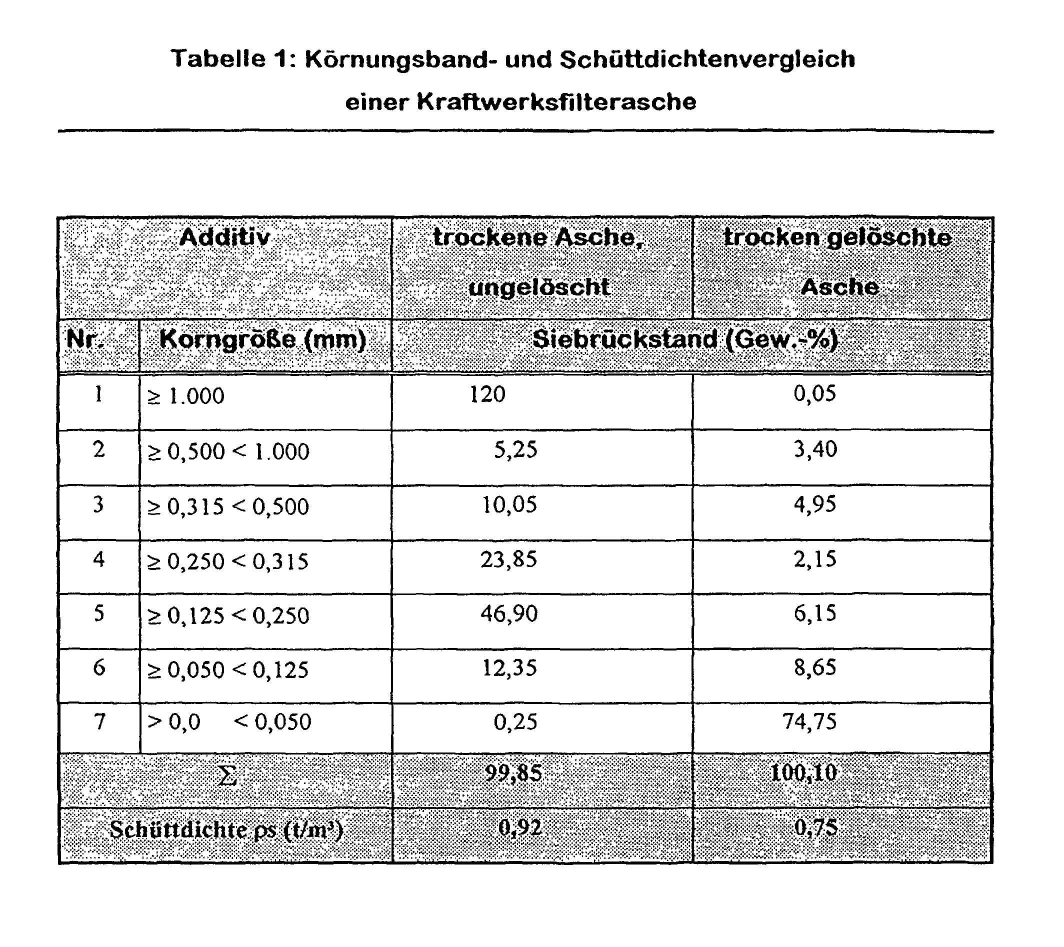

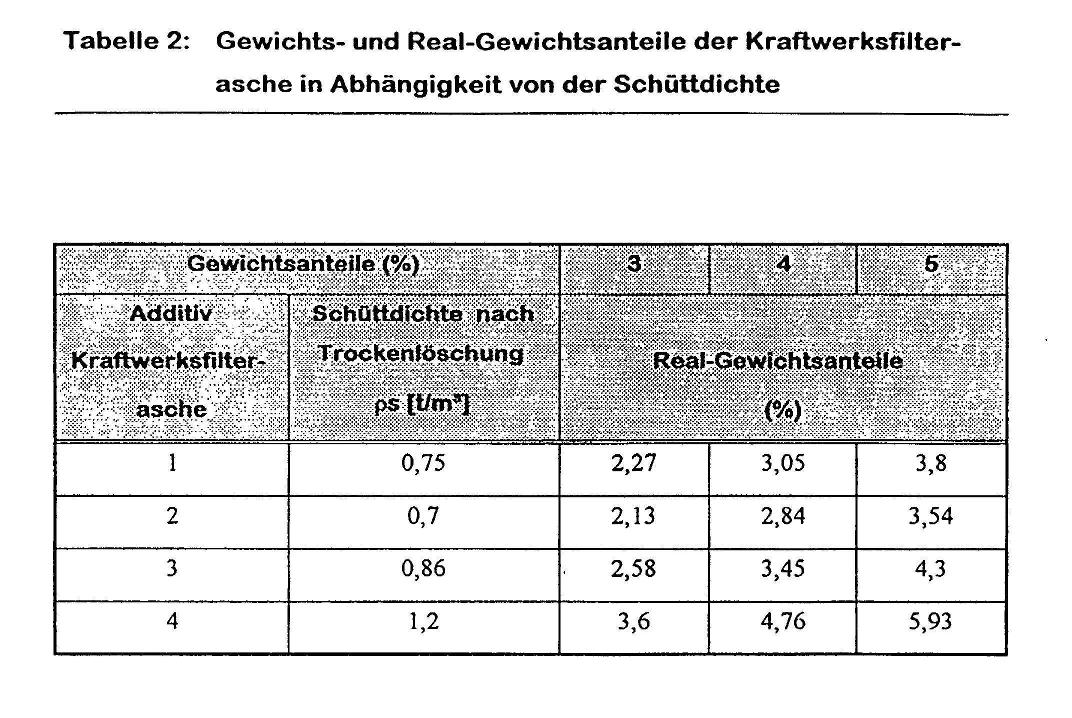

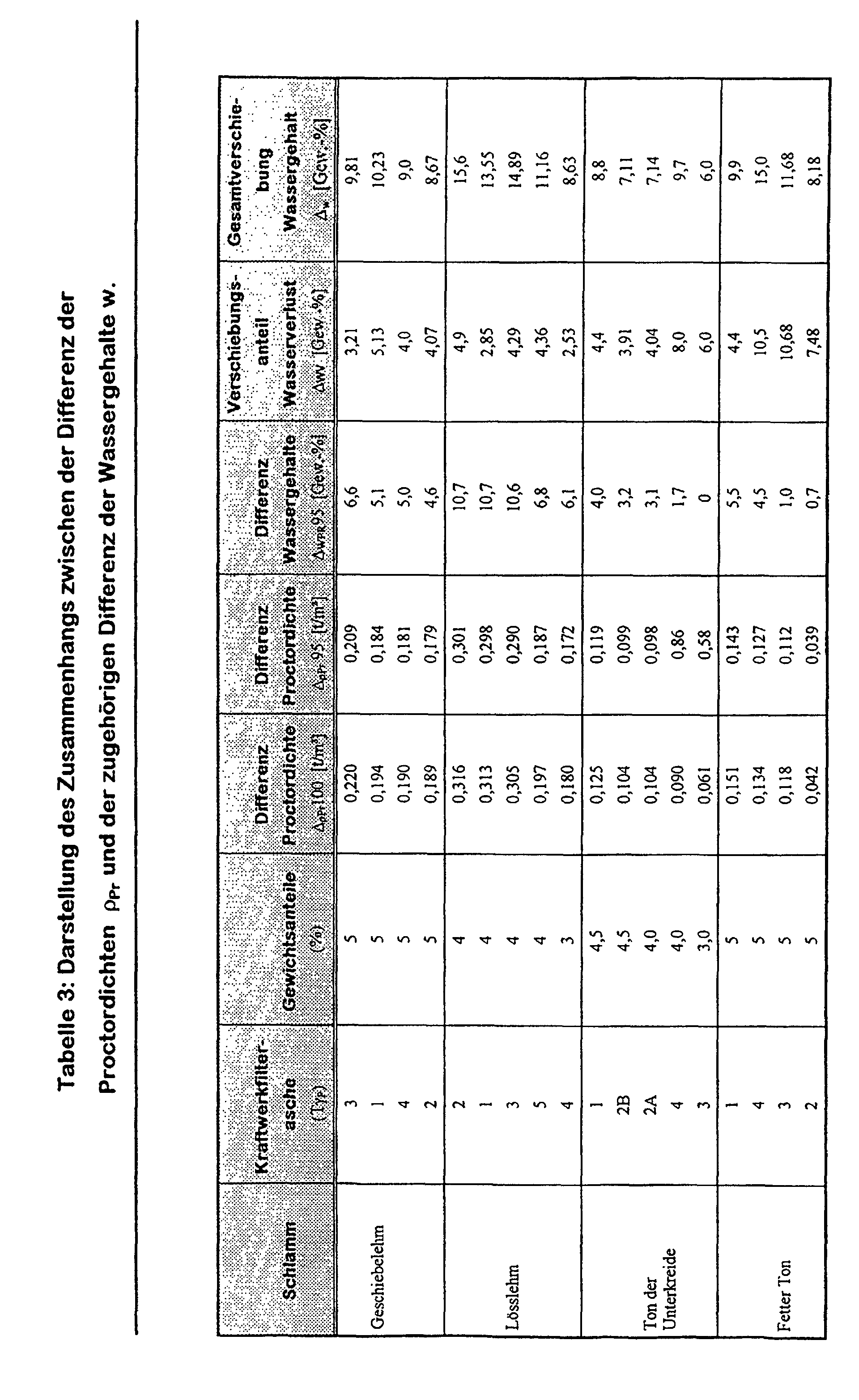

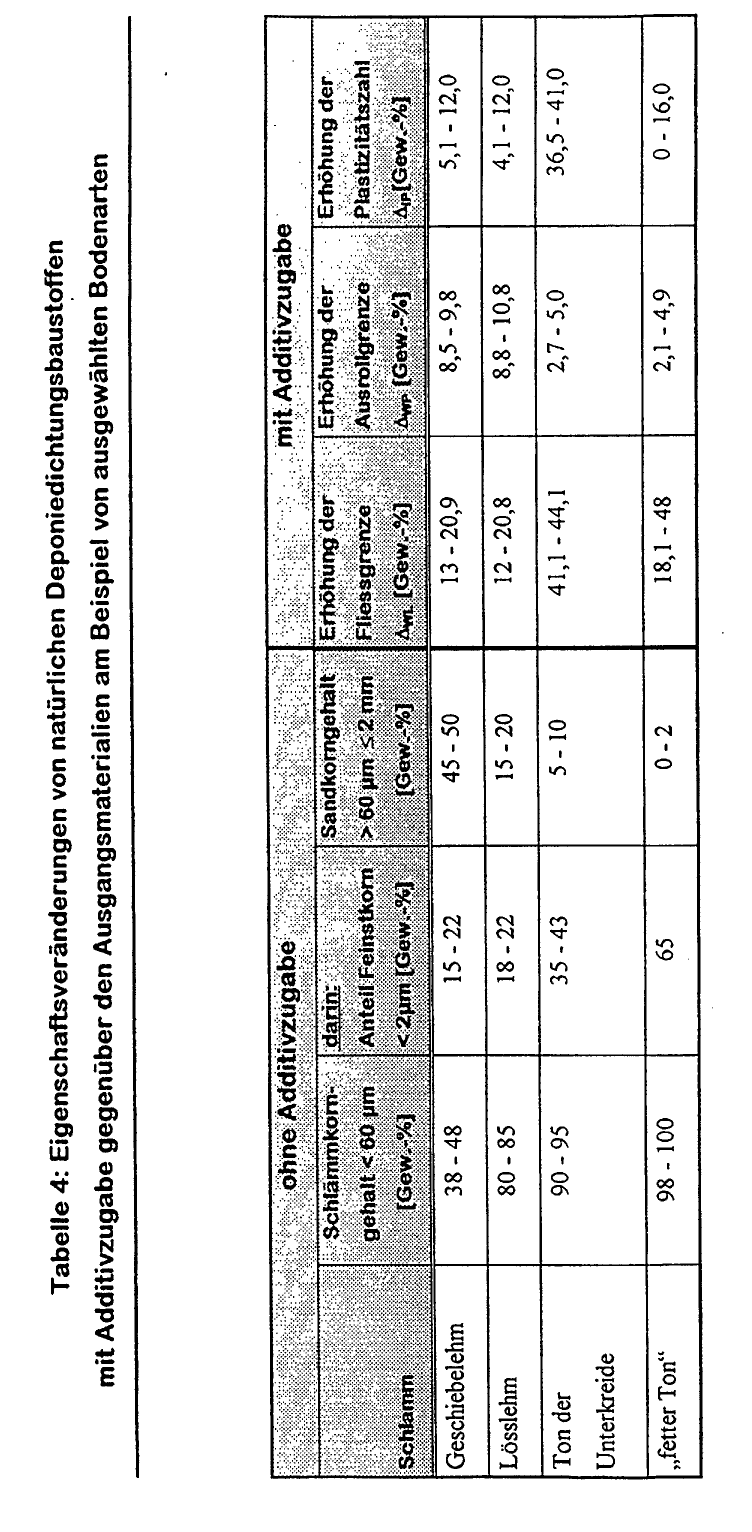

## Patentansprüche

1. Verfahren zur Verbesserung der Transportfähigkeit, Verarbeitbarkeit und Einbaufähigkeit eines Schlamms durch Veränderung seiner Konsistenz, indem dem Schlamm ein Additiv hinzugefügt und dieses in dem Schlamm verteilt wird, wodurch die die Verarbeitbarkeit beschreibende Proctorkurve des Gemisches aus Schlamm und Additiv im Vergleich zu der Proctorkurve des Schlamms in Richtung höherer Wassergehalte verschoben wird, **dadurch gekennzeichnet, daß** dem Schlamm als Additiv eine kalkhaltige Kraftwerksfilterasche mit einem Anteil zwischen 2 und 7 Gew.%, bezogen auf die Trockenmasse des Schlamms, hinzugefügt wird, und daß das Additiv und der Schlamm in volumenkonstanten Anteilen unter Berücksichtigung der Veränderung der Schüttdichte der Kraftwerksfilterasche bei Zutritt von Wasser zwangsgemischt und damit das Additiv im Schlamm homogen verteilt wird.

2. Verfahren nach Anspruch 1, **dadurch gekennzeichnet, daß** zum Erhalt einer reproduzierbaren Konsistenz in dem Gemisch die durch Volumenzunahme der jeweils eingesetzten kalkhaltigen Kraftwerksfilterasche unter Anwesenheit von Wasser nach Zwangsmischung in volumenkonstanten Anteilen sich ergebende Schüttdichte definiert ermittelt wird, und daß die mit dem Gewichtsanteil multiplizierte ermittelte Schüttdichte als Real-Gewichtsanteil dem Schlamm zur Zwangsmischung hinzugefügt wird.

3. Verfahren nach Anspruch 1, **dadurch gekennzeichnet, daß** dem als Schlamm eingesetzten bindigen Boden als Additiv eine kalkhaltige Kraftwerksfilterasche mit einem Anteil zwischen 4 und 5 Gew.%, bezogen auf die Trockenmasse des bindigen Bodens, hinzugefügt wird.

4. Verfahren nach Anspruch 1, **dadurch gekennzeichnet, daß** dem als Schlamm eingesetzten Tonanteil als Additiv eine kalkhaltige Kraftwerksfilterasche mit einem Anteil zwischen 5 und 6 Gew.%, bezogen auf die Trockenmasse des Tohanteils, hinzugefügt wird.

5. Verfahren nach Anspruch 1, **dadurch gekennzeichnet, daß** dem als Schlamm eingesetzten Boden als Additiv eine kalkhaltige Kraftwerksfilterasche mit einem Anteil zwischen 4 und 6 Gew.%, bezogen auf die Trockenmasse des Bodens, hinzugefügt wird.

6. Verfahren nach Anspruch 1, **dadurch gekennzeichnet, daß** dem als Schlamm eingesetzten Klärschlamm als Additiv eine kalkhaltige Kraftwerksfilterasche mit einem Anteil zwischen 5 und 7 Gew.%, bezogen auf die Trockenmasse des Klärschlamms, hinzugefügt wird.

7. Verfahren nach Anspruch 1, **dadurch gekennzeichnet, daß** dem eingesetzten Schlamm als Additiv eine kalkhaltige Kraftwerksfilterasche mit einem Anteil zwischen 5 und 7 Gew.%, bezogen auf die Trockenmasse des Schlamms, hinzugefügt wird.

8. Verfahren nach Anspruch 1, **dadurch gekennzeichnet, daß** die Zwangsmischung für eine Dauer zwischen 2 und 4 Minuten erfolgt.

## Claims

1. Method to improve the readiness for conveyance, working property and readiness to be installed of a sludge by modifying the consistency of the sludge, by adding an additive to the sludge and distributing the additive in the sludge to shift the Proctor curve describing the working property of the mixture of sludge and of the additive in relation to the Proctor curve describing the working property of the sludge in the direction of increased water contents, **characterised in that** a limy filtering ash of a power station is added as an additive in an amount between 2 and 7 weight percent, in respect to the dry mass of the sludge, and **in that** the additive and the sludge is positively mixed with amount having constant volume taking in account the modification of the powder density of the filtering ash of the power station during water being present and **in that** the additive is homogeneously distributed in the sludge.

2. Method of claim 1, **characterised in that** the for the purpose to obtain a reproducible consistency in the mixture the bulk density resulting after increase of volume of the used limy filtering ash under presence of water after compulsory mixing with constant amounts of volume is detected, and **in that** the detected bulk density multiplied with the weight amount is added as a real weight amount to the sludge for compulsory mixing.

3. Method of claim 1, **characterised in that** an additive of a limy filtering ash is added to a cohesive ground as sludge in the amount between 4 and 5 weight percent, in respect to the dry mass of the cohesive ground.

4. Method of claim 1, **characterised in that** a limy filtering ash in an amount between 5 and 6 weight percent, with respect to the dry mass of the clay amount, is added as an additive to the amount of clay as sludge.

5. Method of claim 1, **characterised in that** a limy filtering ash in an amount between 4 and 6 weight percent, with respect to the dry mass of the ground, is added as an additive to the ground used as a sludge.

6. Method of claim 1, **characterised in that** a limy filtering ash in an amount between 5 and 7 weight percent, with respect to the dry mass of the sewage sludge, is added as an additive to the used sewage sludge.

7. Method of claim 1, **characterised in that** a limy filtering ash in an amount between 5 and 7 weight percent, with respect to the dry mass of the sludge, is added as an additive to the used sludge.

8. Method of claim 1, **characterised in that** the compulsory mixing is conducted in a duration between 2 and 4 minutes.

## Revendications

1. Procédé pour améliorer l'aptitude au transport, la maniabilité et l'ouvrabilité de boues par variation de leur consistance, en leur ajoutant un additif et en le répartissant dans les boues, ce qui a pour effet de déplacer la courbe de proctor, qui décrit la maniabilité, du mélange de boues et d'additif, vers des teneurs en eau plus élevées par rapport à la courbe de proctor des boues, caractérisé en en ce qu'on ajoute aux boues, comme additif, une cendre calcaire de filtre de centrale électrique à raison de 2 à 7 % en poids, par rapport à la masse sèche des boues, et en ce que l'additif et les boues en proportions constantes en volume, compte tenu de la variation de la densité apparente de la cendre de filtre de centrale électrique, sont mélangées de manière forcée sous arrivée d'eau et de manière que l'additif soit réparti de manière homogène dans les boues.

2. Procédé selon la revendication 1, **caractérisé en ce que** pour obtenir une consistance reproductible du mélange, on détermine de manière définie la densité apparente qui résulte de l'augmentation du volume de la cendre calcaire de filtre de centrale électrique utilisée dans chaque cas, en présence d'eau après mélange forcé en proportions constantes en volume, et **en ce que** la densité apparente déterminée multipliée par la proportion en poids est ajoutée aux boues comme proportion réelle en poids pour le mélange forcé.

3. Procédé selon la revendication 1, **caractérisé en ce qu'**au sol cohérent utilisé comme boues on ajoute comme additif une cendre calcaire de filtre de centrale électrique à raison de 4 à 5 % en poids par rapport à la masse sèche du sol cohérent.

4. Procédé selon la revendication 1, **caractérisé en ce qu'**à la proportion d'argile utilisée comme boues on ajoute comme additif une cendre calcaire de filtre de centrale électrique à raison de 5 à 6 % en poids par rapport à la masse sèche de la proportion d'argile.

5. Procédé selon la revendication 1, **caractérisé en ce qu'**au sol utilisé comme boues on ajoute comme additif une cendre calcaire de filtre de centrale électrique à raison de 4 à 6 % en poids par rapport à la masse sèche du sol.

6. Procédé selon la revendication 1, **caractérisé en ce qu'**au boues clarifiées utilisées comme boues on ajoute comme additif une cendre calcaire de filtre de centrale électrique à raison de 5 à 7 % en poids par rapport à la masse sèche des boues clarifiées.

7. Procédé selon la revendication 1, **caractérisé en ce qu'**aux boues utilisées on ajoute comme additif une cendre calcaire de filtre de centrale électrique à raison de 5 à 7 % en poids par rapport à la masse sèche des boues.

8. Procédé selon la revendication 1, **caractérisé en ce que** le mélange forcé s'effectue pendant une durée comprise entre 2 et 4 minutes.
